# EUROPEAN PATENT APPLICATION

(11) **EP 3 951 688 A1**
(43) Date of publication of application: **09.02.2022**
(21) Application number: 20189653.7
(22) Date of filing: 05.08.2020
(51) Int. Cl.: G06Q 20/12, G06Q 20/38, G06Q 20/40

(54) **A METHOD, SYSTEM AND COMPUTER PROGRAM PRODUCT FOR INSTRUCTING A TRANSFER FROM AN ACCOUNT**

(71) Applicant: Mastercard International Incorporated, Purchase NY 10577 (US)
(72) Inventor: O'CONNELL, Paul, Dublin (IE); DONNELLY, Diarmuid, Dublin, D14 Y2E9 (IE); JANJIS, Tanja Babic, Dublin (IE); MAGUIRE, Stephen, Dublin, D14 NW59 (IE)
(74) Representative: D Young & Co LLP

(57) **Abstract**

A method of instructing a transfer from an account is provided, the method comprising: receiving, using communication circuitry, a message requesting a transfer from a first account, the first account being identified by a unique identifier; determine, using processing circuitry, that the first account is a virtual account on the basis of one or more characteristics of the unique identifier; wherein, when it is determined that the first account is a virtual account, the method comprises: identifying, using the processing circuitry, a link between the virtual account and a physical account, and performing validation of the link; retrieving, using retrieving circuitry, data related to the virtual account from the storage related to the physical account; and instructing, using the processing circuitry, a transfer from the virtual account when the requested transfer complies with one or more requirements of the data related to the virtual account.

## Description

### BACKGROUND

### Field of the Disclosure

The present invention relates to a method, system and computer program product for instructing a transfer from an account.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

With developments in computing technology, there has been an increase in use of electronic devices, including portable electronic devices, for completion of online payments and transactions. For example, individuals may use their personal electronic devices to perform an online transfer of funds from an account. Specifically, users may use their personal electronic devices to perform an online transaction (such as a purchase of goods) from an online merchant, using funds from a personal account.

However, there is a problem in that, in order to complete these transfers (including online payments and transactions), a user is required to submit sensitive details regarding their account over the internet. These sensitive details include unique identifiers which enable the account (or accounts) to be identified for use in the transfer. There is a risk that these account details may be intercepted and/or stolen, leaving the user's account vulnerable to fraudulent exploitation (such as use by an unauthorised person and/or use in unauthorised transfers).

Moreover, where an account (such as a personal account of a consumer) is used for a number of different types of legitimate transfers, it can be difficult to identify fraudulent exploitation of the account. Accordingly, fraudulent exploitation of the account may go undetected for a period of time. This increases the complexity in recovering the funds associated with the fraudulent exploitation of an account.

It is an aim of the present disclosure to provide a technical solution to these issues.

### SUMMARY

In accordance with a first aspect of the disclosure, a method of instructing a transfer from an account is provided, the method comprising: receiving, using communication circuitry, a message requesting a transfer from a first account, the first account being identified by a unique identifier; determining, using processing circuitry, that the first account is a virtual account on the basis of one or more characteristics of the unique identifier; wherein, when it is determined that the first account is a virtual account, the method comprises: identifying, using the processing circuitry, a link between the virtual account and a physical account, and performing validation of the link; retrieving, using retrieving circuitry, data related to the virtual account from the storage related to the physical account; and instructing, using the processing circuitry, a transfer from the virtual account when the requested transfer complies with one or more requirements of the data related to the virtual account.

In accordance with a second aspect of the present disclosure a system for instructing a transfer from an account is provided, the system comprising circuitry configured to: receive a message requesting a transfer from a first account, the first account being identified by a unique identifier; determine that the first account is a virtual account on the basis of one or more characteristics of the unique identifier; wherein, when it is determined that the first account is a virtual account, the circuitry is further configured to: identify a link between the virtual account and a physical account, and perform validation of the link; retrieve data related to the virtual account from the storage related to the physical account; and instruct a transfer from the virtual account when the requested transfer complies with one or more requirements of the data related to the virtual account.

In accordance with a third aspect of the present disclosure, a computer program product comprising instructions which, when the program is executed by a computer, cause the computer to carry out a method of instructing a transfer from an account is provided, the method comprising: receiving, using communication circuitry, a message requesting a transfer from a first account, the first account being identified by a unique identifier; determining, using processing circuitry, that the first account is a virtual account on the basis of one or more characteristics of the unique identifier; wherein, when it is determined that the first account is a virtual account, the method comprises: identifying, using the processing circuitry, a link between the virtual account and a physical account, and performing validation of the link; retrieving, using retrieving circuitry, data related to the virtual account from the storage related to the physical account; and instructing, using the processing circuitry, a transfer from the virtual account when the requested transfer complies with one or more requirements of the data related to the virtual account.

According to embodiments of the disclosure, fraudulent exploitation of an account can be reduced. The present disclosure is not particularly limited to these advantageous technical effects, there may be others as will be apparent to the person skilled in the art when reading the disclosure.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 illustrates an apparatus for instructing a transfer from an account in accordance with embodiments of the disclosure;
Figure 2 illustrates an example network to which an apparatus for instructing a transfer from an account can be applied in accordance with embodiments of the disclosure;
Figure 3 illustrates an example account structure in accordance with embodiments of the disclosure;
Figure 4 illustrates an example configuration of an apparatus for instructing a transfer from an account in accordance with embodiments of the disclosure;
Figure 5 illustrates an example configuration of an apparatus for instructing a transfer from an account in accordance with embodiments of the
Figure 6A illustrates an example situation to which embodiments of the disclosure can be applied;
Figure 6B illustrates an example situation to which embodiments of the disclosure can be applied;
Figure 6C illustrates an example situation to which embodiments of the disclosure can be applied;
Figure 6D illustrates an example situation to which embodiments of the disclosure can be applied;
Figure 6E illustrates an example situation to which embodiments of the disclosure can be applied;
Figure 6F illustrates an example situation to which embodiments of the disclosure can be applied; and
Figure 7 illustrates a method of instructing a transfer from an account in accordance with embodiments of the disclosure.

### DESCRIPTION OF THE EMBODIMENTS

Referring now to the drawings, wherein like reference numerals designate identical or corresponding parts throughout the several views.

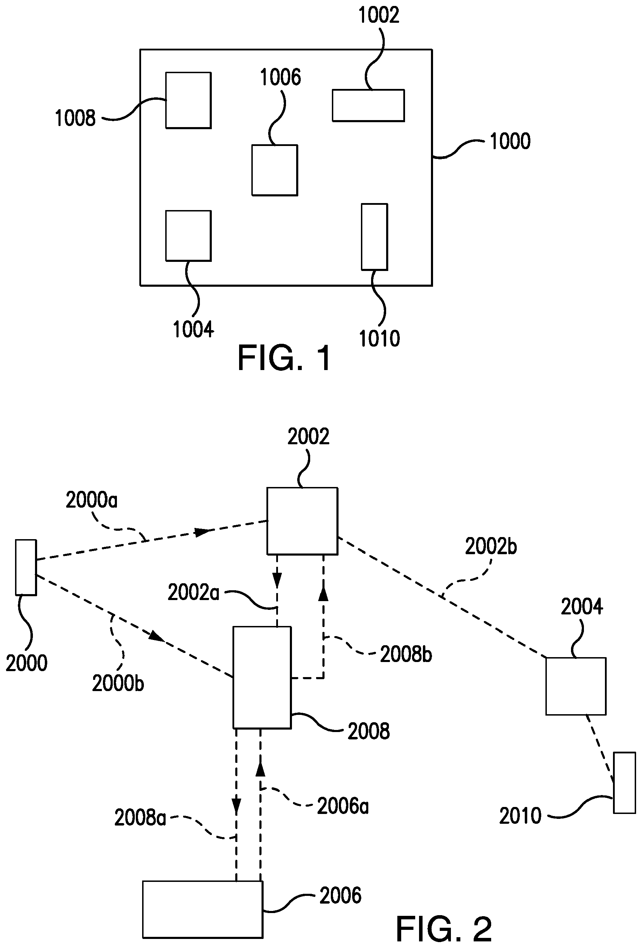

Referring now to Figure 1, an apparatus in accordance with embodiments of the disclosure is illustrated. Typically, an apparatus 1000 according to embodiments of the disclosure is a computer device such as a personal computer or a terminal connected to a server. Indeed, in embodiments, the apparatus may also be a server. The apparatus 1000 is controlled using a microprocessor or other processing circuitry 1006. More generally, the apparatus 1000 is a data processing apparatus.

The processing circuitry 1006 may be a microprocessor carrying out computer instructions or may be an Application Specific Integrated Circuit. The computer instructions are stored on storage medium 1010 which may be a magnetically readable medium, optically readable medium or solid state type circuitry. The storage medium 1010 may be integrated into the apparatus 1000 or may be separate to the apparatus 1000 and connected thereto using either a wired or wireless connection. The computer instructions may be embodied as computer software that contains computer readable code which, when loaded onto the processor circuitry 1006, configures the processor circuitry 1006 to perform a method according to embodiments of the disclosure.

Additionally connected to the processor circuitry 1006, is a user input unit 1002. The user input unit 1002 may be a touch screen or may be a mouse or stylus type input device. The user input 1002 may also be a keyboard or any combination of these devices.

Communication circuitry 1004 is also coupled to the processing circuitry 1006. The communication circuitry 1004 may provide a connection to a Local Area Network or a Wide Area Network such as the Internet or a Virtual Private Network or the like. For example, the communication circuitry 1004 may be connected to infrastructure allowing the processor circuitry 1006 to communicate with other devices or infrastructure equipment in order to obtain or provide relevant data. For example, the communication circuitry 1004 may enable the apparatus 1000 to communicate with financial institutions in a banking network or the like. The communication circuitry 1004 may therefore be behind a firewall or some other form of network security.

Additionally coupled to the processing circuitry 1006, is a display device 1008. The display device, although shown integrated into the apparatus 1000, may be separate to the apparatus 1000 and may be an electronic display (e.g. liquid crystal display (LCD) or the like) or some kind of device allowing the user to visualise the operation of the system. In addition, the display device 1008 may be a printer or some other device allowing relevant information generated by the apparatus 1000 to be viewed by the user or by a third party.

An example network, such as a banking network or the like, is illustrated in Figure 2 of the present disclosure.

The example network of Figure 2 includes a user equipment device 2000 (such as a mobile phone, personal computer, laptop computer, tablet computing device or the like), a first financial institution 2002 (such as a bank or banking institution or the like), a second financial institution 2004, an external data storage 2006 (such as a data server or external storage device) a central validation system 2008 (the details of which are described below) and a merchant equipment device 2010 (such as a mobile phone, personal computer, laptop computer, tablet computing device or the like) in communication with the second financial institution. In certain situations, central validation system 2008 may be an apparatus such as apparatus 1000 described with reference to Figure 1 of the present disclosure.

In this example, a user has an account (such as a bank account) registered with financial institution 2002. The user uses this account to store funds which can be used in transactions in exchange for goods and services. The user can access the funds held with the first financial institution 2002 using the user equipment device. That is, the user equipment device 2000 is able to communicate with the first financial institution 2002 in order to access certain details regarding the account the user holds with the first financial institution 2002. In some examples, the user equipment device 2000 is able to communicate with the first financial institution 2002 over the internet.

Now, in this example, the user (operator or controller of user equipment device 2000) wishes to transfer funds from the account held with the first financial institution 2002 to an account held with financial institution 2004. The account held with financial institution 2004 may, in certain examples, be an account operated by a merchant (such as the operator of merchant device 2010).

In known transfers, the user operates the user equipment device 2000 to send a request to the first financial institution 2002 (over communication link 2000a) to transfer funds from the user's account with the first financial institution to the merchant's account held by the second financial institution 2004. The transfer between the user's account held with the first financial institution and the merchant's account held with the second financial institution 2004 is performed over the communication link 2002b. In examples, the transfer may be performed over known payment rails. For example, the transfer may be a Faster Payment, BACS payment, CHAPS payment or the like.

In this known transfer, the user must send a request to the first financial institution 2002 comprising details regarding the account held with the first financial institution in order to engage in the transfer. For example, the user must share their International Bank Account Number (IBAN) and/or their Bank Identifier Code (BIC) in order to transfer funds from their account with the first financial institution 2002. However, there is a risk that these account details may be intercepted and/or stolen, leaving the user's account vulnerable to fraudulent exploitation (such as use by an unauthorised person and/or use in unauthorised transfers).

A technical solution for improving the security of a transfer between accounts, which reduces fraudulent exploitation of the account, is desired.

In certain examples, a virtual account may be utilized in order to improve the security of transfers between accounts.

A virtual account is a sub-account, linked to a physical account, which can be used to engage in a transfer without disclosure of the unique identification details (such as the IBAN and/or BIC) of the physical account. A number of virtual accounts can be generated from a single physical account.

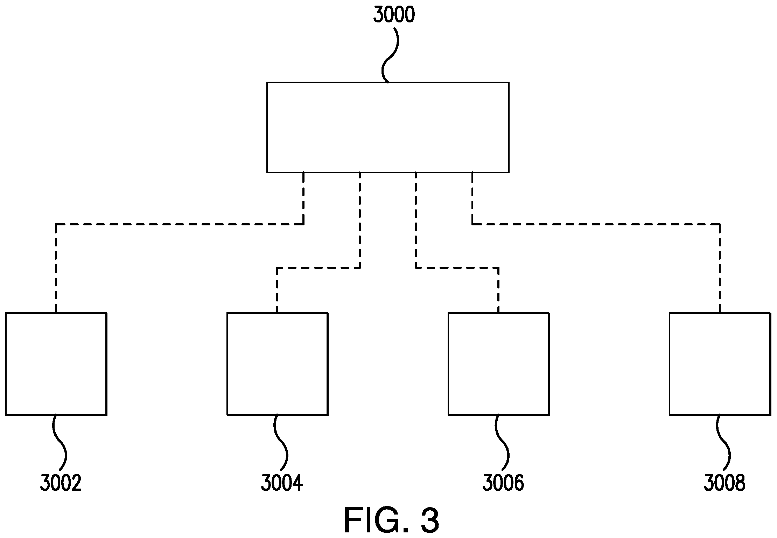

Figure 3 illustrates an example account structure in accordance with embodiments of the disclosure. In this example, a user holds a physical account 3000 with a first financial institution. This may be the user's main bank account, which holds the user's funds. A number of virtual sub-accounts 3002, 3004, 3006 and 3008 are also illustrated. Each of these virtual accounts has an individual unique identifier (such as an individual IBAN and/or BIC). The virtual accounts offer the same capabilities as the physical account 3000. That is, the unique identifier of the virtual account can be used in order to engage in a transfer of funds to other accounts. In examples, payments to any of the one or more of the virtual accounts associated with the physical account are rerouted to the physical account 3000.

It will be appreciated that, in some examples, a financial institution (such as financial institution 2002) may hold details regarding both physical and virtual accounts held by a user. Each of these accounts will be identified by the corresponding unique identifier. However, details regarding the account structure (that is, details indicating the relationship between the virtual account and a physical account) may be stored externally to the financial institution (in an external storage such as external storage 2006, for example). That is, the bank may 'see' only the unique identifier (such as an IBAN and/or BIC) of each account (physical or virtual) which it holds, while details regarding the link between a virtual account and a corresponding physical account are held externally.

Since the unique identifier of the virtual account is used in order to engage in a transfer of funds, the unique identifier of the physical account need not be disclosed by the user. Accordingly, the unique identifier of the physical account can be kept secure, and the physical account is less vulnerable to fraudulent exploitation. Moreover, since the virtual accounts are sub-accounts of the physical account 3000, the user can activate and/or deactivate the virtual accounts as required without impacting the operation and/or authenticity of the physical account 3000. As such, if the virtual account is used for fraudulent activity, it can be shut down when that fraudulent activity has been identified. This prevents continued fraudulent exploitation of the virtual account.

However, there is a difficulty in that, even with virtual accounts, fraudulent exploitation of the virtual account is possible, as the virtual account details, if intercepted, may be utilized by a fraudster to gain unauthorised access to the funds associated with the physical account. Fraudulent exploitation of the virtual account may then proceed for an extended period of time being the fraudulent activity has been identified. Recovery of funds lost through fraudulent activity can be difficult to achieve.

The inventors have realised a surprising opportunity to utilize virtual accounts, with individual controls, to enhance security of account transfers and reduce the risk of fraudulent exploitation.

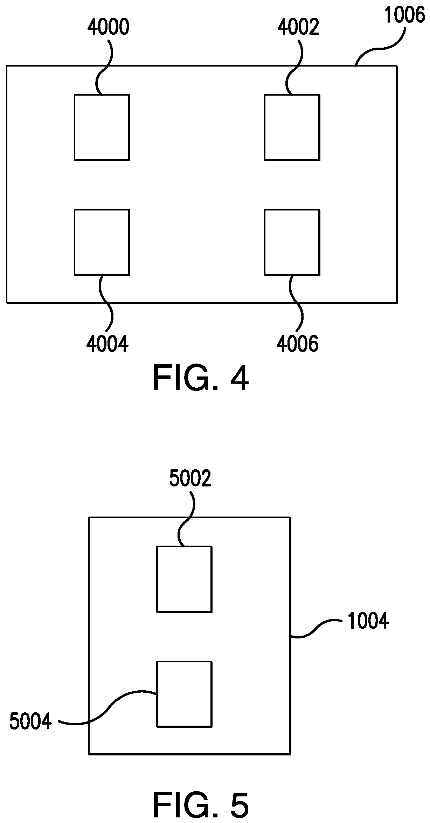

Accordingly, an apparatus for instructing a transfer from an account is provided in accordance with embodiments of the disclosure. The apparatus for instructing a transfer from an account may be an apparatus such as apparatus 1000 described with reference to Figure 1 of the present disclosure, for example. In this case, an example configuration of the processing circuitry 1006 is illustrated in Figure 4 of the present disclosure. Furthermore, an example configuration of the communication circuitry 1004 of the apparatus 1000 is illustrated in Figure 5 of the present disclosure. The apparatus according to embodiments of the disclosure is therefore configured to enable utilization of virtual accounts, with individual controls, to enhance security of account transfers and reduce the risk of fraudulent exploitation.

Specifically, in the example configuration of Figure 4 of the present disclosure, the processing circuitry 1006 comprises a determining unit 4000, an identifying unit 4002, a validation unit 4004 and an instructing unit 4006. Furthermore, in the example configuration of Figure 5 of the present disclosure, the communication unit 1004 comprises a receiving unit 5002 and a retrieving unit 5004.

According to embodiments of the disclosure, receiving unit 5002 is configured to receive a message requesting a transfer from a first account, the first account being identified by a unique identifier. Determining unit 4000 is configured to determine, that the first account is a virtual account on the basis of one or more characteristics of the unique identifier. When it is determined that the first account is a virtual account, the identifying unit 4002 is configured to identify a link between the virtual account and a physical account held in storage. The validation unit is then configured to perform validation of the link.

Once the link has been validated, retrieving unit 5004 is configured to retrieve data related to the virtual account from the storage related to the physical account. Finally, the instructing unit 4006 is configured to instruct a transfer from the virtual account when the requested transfer complies with one or more requirements of the data related to the virtual account.

In examples, apparatus 1000 may comprise a system, with the respective portion of apparatus 1000 being distributed across a network (such as a banking network). For example, in the banking network of Figure 2, certain portions of the system 1000 may be provided at the financial institution, while certain portions of the system may be provided at the central validation system.

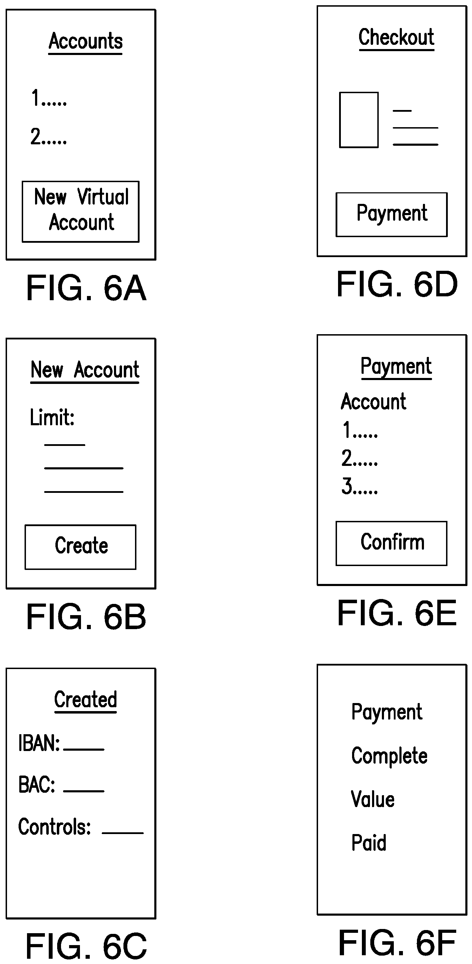

Returning now to Figure 2 of the present disclosure, an example transfer in a banking network according to embodiments of the disclosure is described. In this example, the user has created a virtual account (such as virtual account 3002) possessing an individual unique identifier, from a physical account (such as physical account 3000) held with a first financial institution (such as financial institution 2002). The mechanism of creating the virtual account from the physical account is not particularly limited, and could be performed through an instruction or request to the first financial institution (which holds the physical account). However, details regarding creation of the virtual account and use of that virtual account in a transfer, as described from the user equipment side, are provided with reference to Figures 6A to 6F of the present disclosure.

In this example of Figure 2, subsequent to the creation of the virtual account, the user wishes to use the virtual account to perform a transfer of funds (such as to transfer funds to a merchant in exchange for the purchase of goods and/or services which are provided by the merchant). Accordingly, the user initiates a transfer request to transfer funds to the merchant's account (such as a Faster Payment, BACS payment, CHAPS transfer or the like) using the virtual account. Initiating a transfer request may comprise sending a digital message across the banking network, from the user equipment device 2000, requesting a transfer from the virtual account (the virtual account being identified by the corresponding unique identifier). Specifically, in this example, the user initiates a transfer request using electronic device 2000, the transfer request requesting a transfer of funds from a virtual account held with financial institution 2002 to an account held in financial institution 2004.

Upon receiving the request, the financial institution 2002 recognises the unique identifier of the user as relating to a virtual account. There are a number of mechanisms by which the financial institution 2002 may recognise that the unique identifier relates to a virtual account. In certain examples, the financial institution may identify that the unique identifier of the account from which the transfer is requested falls within a range dedicated to virtual accounts. That is, a first range of unique identifier values may be reserved for physical accounts; while a second range of unique identifier values may be reserved for virtual accounts. In this manner, when a request is received for a transfer from an account having a unique identifier the value of which falls within the second range, the financial institution can identify that the account from which the funds are to be transferred is a virtual account. In fact, any characteristics of the unique identifier provided with the requested transfer may be used in order to identify that the account is a virtual account as required.

However, with the financial institution 'seeing' only the account details, it will be appreciated that the financial institution may not have information regarding the physical account to which the virtual account relates. Accordingly, having identified that the transfer is requested from a virtual account, the financial institution transmits a request to the central validation system 2008 for validation of the virtual account.

That is, according to embodiments of the disclosure, upon identification that the account is a virtual account, the financial institution 2002 initiates a request to central validation system 2008 through communication link 2002a.

When the request from financial institution 2002 is received, apparatus central validation system 2008 is configured to identify the link between the virtual account and a corresponding physical account held in a storage (such as external storage 2006). Specifically, the apparatus 1000 is configured in order to identify the physical account from which the virtual account has been created. This identification may be performed using a look-up table held in storage 2006. Effectively, in certain examples, central validation system 2008 maps the unique identifier of the virtual account to the unique identifier of the physical account. Central validation system 2008 must then validate the link between the virtual account and the physical account to which the virtual account is related. This is performed in order to verify that the link between the virtual account and the physical account is genuine. Furthermore, validation ensures that the user has a legitimate interest in the use of the virtual account (being the authorised user of the virtual account, for example). Validation can be performed by a number of technical means depending on the situation. However, in some examples, validation of the link comprises validation of a digital signature received with the message requesting a transfer from the first account (this being generated by the user equipment device 2000 upon initiation of the transfer request when the user has been authenticated).

Once the link between the virtual account and the physical account has been validated, the central validation system is configured to retrieve data related to the virtual account from the storage related to the physical account. The retrieval of the data related to the virtual account from the storage may be performed over the communication path 2008a and 2006a illustrated in Figure 2 of the present disclosure.

That is, the virtual account is first linked to a physical account (through use of the look-up table or the like) to identify the physical account which is related to that virtual account. Then, once the corresponding physical account has been identified, an area of storage related to that physical account is accessed by the central validation system 2008. Within that area of storage (related to the physical account) details regarding the virtual account (or accounts) linked to that physical account are held. These details comprise the data related to the virtual account.

In some examples, this data may comprise information regarding certain controls and/or restrictions which are placed on the use of the virtual account (linked to the physical account). Consider the example account structure illustrated in Figure 3 of the present disclosure. Here, a physical account 3000 is present, which is linked to four individual virtual accounts 3002, 3004, 3006 and 3008. Each of the virtual accounts 3002, 3004, 3006 and 3008 has an individual unique identifier (such as an individual IBAN). Furthermore, when the link with the virtual account is created, or at a time subsequent to the creation of the virtual account, the user may create data associated with each individual virtual account, the data comprising controls which limit the use of the virtual account. In some examples, the data may comprise pre-defined spending controls for the individual virtual account. Alternatively, or in addition, the data may comprise an individual transaction limit; a cumulative transaction limit which can be reached within a predetermined time period; a restriction on a type of transaction and/or a restriction on a category of goods/services purchased by the transaction.

For example, the user may create data (for virtual account 3002) which restricts the virtual account 3002 for use in Faster Payment transactions up to a maximum value of £20. The user may further create data (for virtual account 3004) which restricts the virtual account 3004 for use in a single transaction per day (such as a single transaction per 24 hour time period). Furthermore, for virtual account 3006, the user may limit the use of the virtual account 3006 to payment of utility bills (such as household bills to certain gas, electricity and water companies). Finally, for virtual account 3008, the user may limit the use of the virtual account 3008 to use in cumulative transactions up to a value of £200 per week.

The data, restricting use of each of the virtual accounts, is stored in a storage area reserved for the physical account, such that the data can only be accessed and retrieved by the central validation apparatus 2008 once the link between the virtual account and the physical account has been identified and validated. This ensures that the control data, for each of the virtual accounts linked to the physical account, remains secure and is not susceptible to fraudulent or unauthorised modification.

Returning to Figure 2, once the central validation system 2008 has retrieved the data related to the virtual account from the storage related to the physical account, the central validation system 2008 is configured to verify that the requested transfer (from the virtual account) matches the data related to the virtual account which has been retrieved from the storage. That is, an assessment is made that the requested transfer complies with one or more requirements of the data related to the virtual account. When the virtual account has a maximum spending limit of £20 per transfer, for example, it is verified that the requested transfer value does not exceed this limit.

Finally, central validation system 2008 is configured to instruct a transfer from the virtual account when the requested transfer complies with one or more requirements of the data related to the virtual account.

In examples, the payment may be instructed by issuance of a message (across communication path 2008b) to financial institution 2002 that the transfer from the virtual account should proceed. Financial institution 2002 can then initiate the transfer from the user's virtual account to the account of the merchant (held in financial institution 2004) using the payment rails 2002b.

As such, according to embodiments of the disclosure, the user can use a virtual account, with individual controls, to conduct a transfer of funds to a merchant. Sensitive information regarding the user's physical account is not disclosed (e.g. transmitted across the network), thus increasing the security of the transfer. Furthermore, individual controls restrict the use of the virtual accounts, such that even in the event that the unique identifier of the virtual account is intercepted by fraudsters, the fraudsters are unable to fraudulently exploit the virtual account outside the pre-defined controls and restrictions. In fact, according to embodiments of the disclosure, attempts to use the virtual account fraudulently (outside of the pre-defined controls and restrictions) can be more rapidly identified, reducing the complexity of recovery of funds which were transferred through fraudulent activity.

In other words, embodiments of the present disclosure provide an extra layer of security and fraud protection, as transfers from virtual accounts are validated and compared to pre-configured controls prior to initiation of the transfer.

Embodiments of the disclosure will now be further described with reference to an example transfer as seen on the user device side of the network. Figures 6A to 6F illustrates example situation to which embodiments of the disclosure can be applied, whereby a user first creates a virtual account using a user equipment device, then uses that virtual account to conduct a purchase of goods from a merchant.

In Figure 6A, the display of a user equipment device (such as user equipment device 2000 described with reference to Figure 1 of the present disclosure) is illustrated. Here, the user has activated a program or application on the user equipment device to enable operations related to their banking accounts, held with a financial institution, to be performed and/or requested, using the user equipment device. Access to this application on the user equipment device may be restricted, requiring the user complete user authentication prior to activation and/or operation of the application. For example, the user may be required to enter a password to launch the application.

Once the application has been opened, the user operates the user equipment device to navigate the application in order to view all the accounts (both physical and virtual) which are held with a financial institution. In this example, the user then selects one of the physical accounts which are displayed and indicates that they wish to create a new virtual account linked to this physical account. Such indication may be performed through activation of an onscreen element (such as a button or the like).

The screen illustrated in Figure 6B is then presented to the user. At this stage, the user is provided with options which enable the user to enter certain details regarding the virtual account which is to be created. For example, the user can enter data and/or controls which restrict the future use of the virtual account. These may comprise a spending limit (such as a maximum spending limit per transaction) and any other suitable pre-defined restrictions and/or controls which the user wishes to impose upon the virtual account to increase the security of the virtual account.

Once the user has established the required data and/or controls regarding the virtual account which is to be created, the user may operate an onscreen element (such as a button or the like) to confirm the request for creation of a virtual account. The application then controls the user equipment device to transmit a request for creation of the virtual account. Once the virtual account has been created, the user equipment device will receive confirmation. The virtual account will then appear in the list of user accounts within the application on the user equipment device.

Furthermore, once confirmation that the virtual account has been created has been received, in some examples, the user may be presented with a screen such as that illustrated in Figure 6C. Specifically, the user may be provided with visual confirmation that the virtual account has been created. Furthermore, certain details regarding the virtual account including details regarding the unique identifier (such as IBAN and/or BIC) and controls (such as spending limits for the virtual account) or the like may be presented to the user for review.

In this manner, the user can intuitively operate the user equipment device in order to create a virtual account with pre-defined controls for use in future transfers.

In this example, the user then wishes to use their virtual account to conduct a secure online payment to purchase goods from a merchant. Accordingly, the user first operates the user equipment device in order to open a web-browsing application and navigates to the merchant's website. The user then operates the user equipment device to select the goods which they wish to purchase from the merchant. The user then proceeds to a payment screen as is illustrated in Figure 6D of the present disclosure. Here, the user is presented with options for providing the merchant with payment for the purchase of the goods. That is, the total value of the goods which have been selected is displayed, and the user is required to select a means for providing the merchant with payment for the goods. In this example, the user may select, using an onscreen element (such as a button), an option to open the banking application stored on the user equipment device.

As described above, in some examples the banking application may be secure banking application, which requires the user to provide user authentication prior to operation of the banking application.

Once authentication has been received (if required) the user is then presented with a list of accounts which are available for completion of the purchase of the goods and services from the merchant. An example of this list is illustrated in Figure 6E of the present disclosure. This list may comprise a list of both the physical accounts and virtual accounts which are available for use in the transfer. In some examples, the monetary funds which are available in each of these accounts may also be displayed to the user.

It will be appreciated that the virtual account which has been created by the user in the process described with reference to Figures 6A to 6C of the present disclosure will be available for selection by the user. That is, once the virtual account has been created, it will be available for use by the user in any future transaction. Accordingly, the user may select this virtual account for use in the transaction.

At this stage, the application on the user equipment device controls the user equipment device to transmit a message to the financial institution requesting a transfer of funds from the user equipment device to a financial institution (being the financial institution which holds the user's accounts). The request for transfer of funds may, in some examples, include details regarding a value of the funds which are to be transferred, details regarding the account to which the funds will be transferred and the like. The user account, from which the funds are to be transferred, will be identified by the unique identifier of that account (such as the IBAN and/or BIC of the virtual account).

On the network side, the process of determining the account from which the transfer is requested is a virtual account, validating the link between the virtual account and a corresponding physical account, retrieving control data regarding that virtual account (stored with the corresponding physical account) and instructing a payment from the virtual account when the requested transfer complies with the control data, as described with reference to Figure 2 of the present disclosure, is then performed.

Finally, once network side process has been performed, the user equipment device will receive confirmation that payment has been completed. This may be provided to the user in the form of a payment confirmation screen as illustrated in Figure 6F of the present disclosure.

Having completed the transaction using the virtual account, the user may then cease operation of the user equipment device. The goods purchase from the merchant will then be dispatched to the user.

Accordingly, a user can operate a user equipment device (such as a mobile phone or the like) to conduct a payment using virtual accounts in accordance with embodiments of the disclosure. This ensures that sensitive information regarding the user's physical account is not disclosed, further increasing the security of the transfer. Moreover, since a transfer from the virtual account is only instructed when that transfer complies with certain controls placed on the virtual account, fraudulent exploitation of the virtual account can be reduced (even when the unique identifier of that virtual account has been intercepted by a fraudster).

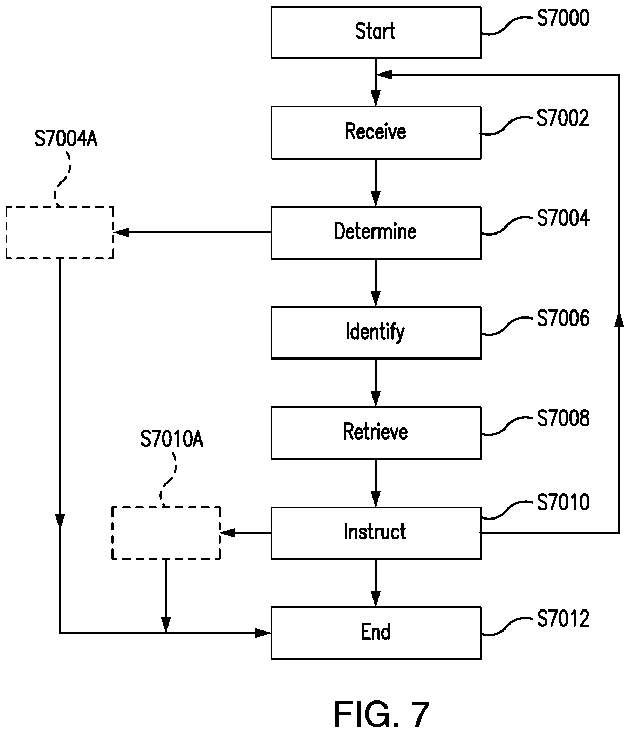

Hence more generally, a method of instructing a transfer from an account is provided by the present disclosure. Figure 7 illustrates the method of instructing a transfer from an account in accordance with embodiments of the disclosure.

The method begins at step S7000 and proceeds to step S7002.

In step S7002, the method comprises receiving, using communication circuitry, a message requesting a transfer from a first account, the first account being identified by a unique identifier. This may relate to a request for a transfer between accounts operated by a user, or a request to transfer funds to a merchant, for example.

Once the message has been received, the method proceeds to step S7004.

In step S7004, the method comprises determining, using processing circuitry, that the first account is a virtual account on the basis of one or more characteristics of the unique identifier. The method used to determine that the first account is a virtual account will vary depending on the form of the unique identifier which is used. However, in certain examples, determining that the unique identifier is a unique identifier of a virtual account may be performed based on the value of that unique identifier.

When it is determined that the first account is a virtual account, the method proceeds to step S7006.

In step S7006, the method comprises identifying, using the processing circuitry, a link between the virtual account and a physical account held in storage, and performing validation of the link. This may be performed by processing circuitry such as processing circuitry 1006 as described with reference to Figure 1 of the present disclosure, for example.

Then, when the link has been identified and validated, the method proceeds to step S7008.

In step S7008, the method comprises retrieving, using retrieving circuitry, data related to the virtual account from the storage related to the physical account. The form of the data for the virtual account, stored in storage related to the corresponding physical account, is not particularly limited and will vary in accordance with the situation. However, in some examples, this may correspond to pre-defined controls restricting the use of the virtual account to certain transfers.

When this data has been retrieved, the method proceeds to step S7010.

In step S7010, the method comprises instructing, using the processing circuitry, a transfer from the virtual account when the requested transfer complies with one or more requirements of the data related to the virtual account. Only if the transfer is instructed, by the processing circuitry, will the transfer proceed.

The method then continues to, and ends with, step S7012. However, in some examples, when step S7010 has been completed, the method may return to step S7000, whereby reception of a further message (requesting a subsequent transfer of funds) is awaited.

As such, according to the method of the present disclosure, fraudulent exploitation of an account can be reduced.

Furthermore, in some examples, additional optional method step S7004A may be included in method 7000. Specifically, when, in step S7004, it is determined, from the unique identifier, that the first account is not a virtual account, the method may comprise (in step S7004A) producing, by the processing circuitry, an indication that the first account is not a virtual account. The requested transfer may then proceed as a known transfer for a physical account.

In some examples, additional optional method step S7010A may be included in method 7000. Specifically, when, in step S7010, it is determined that the requested transfer does not comply with the data related to the virtual account, the method may comprise (in step S7010A) producing, by the processing circuitry, an indication that the requested transaction does not comply with the data. The requested transaction may then be refused.

Hence more generally, a method of instructing a transfer from an account is provided by the present disclosure.

Aspects of the disclosure may also be arranged in accordance with the following numbered clauses.
1. A method of instructing a transfer from an account, the method comprising:
   receiving, using communication circuitry, a message requesting a transfer from a first account, the first account being identified by a unique identifier;
   determining, using processing circuitry, that the first account is a virtual account on the basis of one or more characteristics of the unique identifier;
      wherein, when it is determined that the first account is a virtual account, the method comprises:
      identifying, using the processing circuitry, a link between the virtual account and a physical account, and performing validation of the link;
      retrieving, using retrieving circuitry, data related to the virtual account from the storage related to the physical account; and
      instructing, using the processing circuitry, a transfer from the virtual account when the requested transfer complies with one or more requirements of the data related to the virtual account.
2. The method according to Clause 1, wherein one or more characteristics of the unique identifier include the value of one or more digits of the unique identifier.
3. The method according to any preceding Clause, wherein the unique identifier is one of an international bank account number and/or a bank identifier code.
4. The method according to any preceding Clause, wherein the method comprises identifying a link between the virtual account and a physical account held in storage using a look-up table held in storage.
5. The method according to any preceding Clause, wherein performing validation of the link comprises validation of a digital signature received with the message requesting a transfer from the first account.
6. The method according to any preceding Clause, wherein the data related to the virtual account includes at least one of: an individual transaction limit; a cumulative transaction limit in a predetermined time period; a restriction on a type of transaction and/or a restriction on a category of goods/services purchased by the transaction.
7. A system for instructing a transfer from an account, the system comprising circuitry configured to:
   receive a message requesting a transfer from a first account, the first account being identified by a unique identifier;
   determine that the first account is a virtual account on the basis of one or more characteristics of the unique identifier;
      wherein, when it is determined that the first account is a virtual account, the circuitry is further configured to:
      identify a link between the virtual account and a physical account, and perform validation of the link;
      retrieve data related to the virtual account from the storage related to the physical account; and
   instruct a transfer from the virtual account when the requested transfer complies with one or more requirements of the data related to the virtual account.
8. A computer program product comprising instructions which, when the program is executed by a computer, cause the computer to carry out a method of instructing a transfer from an account, the method comprising:
   receiving, using communication circuitry, a message requesting a transfer from a first account, the first account being identified by a unique identifier;
   determining, using processing circuitry, that the first account is a virtual account on the basis of one or more characteristics of the unique identifier;
      wherein, when it is determined that the first account is a virtual account, the method comprises:
      identifying, using the processing circuitry, a link between the virtual account and a physical account, and performing validation of the link;
      retrieving, using retrieving circuitry, data related to the virtual account from the storage related to the physical account; and
   instructing, using the processing circuitry, a transfer from the virtual account when the requested transfer complies with one or more requirements of the data related to the virtual account.

Obviously, numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. A method of instructing a transfer from an account, the method comprising:
receiving, using communication circuitry, a message requesting a transfer from a first account, the first account being identified by a unique identifier;
determining, using processing circuitry, that the first account is a virtual account on the basis of one or more characteristics of the unique identifier;
wherein, when it is determined that the first account is a virtual account, the method comprises:
identifying, using the processing circuitry, a link between the virtual account and a physical account, and performing validation of the link;
retrieving, using retrieving circuitry, data related to the virtual account from the storage related to the physical account; and
instructing, using the processing circuitry, a transfer from the virtual account when the requested transfer complies with one or more requirements of the data related to the virtual account.

2. The method according to Claim 1, wherein one or more characteristics of the unique identifier include the value of one or more digits of the unique identifier.

3. The method according to Claim 1, wherein the unique identifier is one of an international bank account number and/or a bank identifier code.

4. The method according to Claim 1, wherein the method comprises identifying a link between the virtual account and a physical account held in storage using a look-up table held in storage.

5. The method according to Claim 1, wherein performing validation of the link comprises validation of a digital signature received with the message requesting a transfer from the first account.

6. The method according to Claim 1, wherein the data related to the virtual account includes at least one of: an individual transaction limit; a cumulative transaction limit in a predetermined time period; a restriction on a type of transaction and/or a restriction on a category of goods/services purchased by the transaction.

7. A system for instructing a transfer from an account, the system comprising circuitry configured to:
receive a message requesting a transfer from a first account, the first account being identified by a unique identifier;
determine that the first account is a virtual account on the basis of one or more characteristics of the unique identifier;
wherein, when it is determined that the first account is a virtual account, the circuitry is further configured to:
identify a link between the virtual account and a physical account, and perform validation of the link;
retrieve data related to the virtual account from the storage related to the physical account; and
instruct a transfer from the virtual account when the requested transfer complies with one or more requirements of the data related to the virtual account.

8. A computer program product comprising instructions which, when the program is executed by a computer, cause the computer to carry out a method of instructing a transfer from an account, the method comprising:
receiving, using communication circuitry, a message requesting a transfer from a first account, the first account being identified by a unique identifier;
determining, using processing circuitry, that the first account is a virtual account on the basis of one or more characteristics of the unique identifier;
wherein, when it is determined that the first account is a virtual account, the method comprises:
identifying, using the processing circuitry, a link between the virtual account and a physical account, and performing validation of the link;
retrieving, using retrieving circuitry, data related to the virtual account from the storage related to the physical account; and
instructing, using the processing circuitry, a transfer from the virtual account when the requested transfer complies with one or more requirements of the data related to the virtual account.
